(19) Europäisches Patentamt
European Patent Office
Office européen des brevets

(11) Veröffentlichungsnummer: **0 065 195**
**B1**

(12) # EUROPÄISCHE PATENTSCHRIFT

(45) Veröffentlichungstag der Patentschrift: **14.03.84**

(51) Int. Cl.³: **C 09 D 11/10**, C 08 F 240/00, C 08 F 8/46

(21) Anmeldenummer: **82103840.3**

(22) Anmeldetag: **05.05.82**

(54) **Toluoltiefdruck-Bindemittel.**

(30) Priorität: **15.05.81 DE 3119375**

(43) Veröffentlichungstag der Anmeldung: **24.11.82 Patentblatt 82/47**

(45) Bekanntmachung des Hinweises auf die Patenterteilung: **14.03.84 Patentblatt 84/11**

(84) Benannte Vertragsstaaten: **DE IT NL SE**

(56) Entgegenhaltungen:
**FR - A - 2 179 764**
**FR - A - 2 250 767**

(73) Patentinhaber: **BASF Aktiengesellschaft, Carl-Bosch-Strasse 38, D-6700 Ludwigshafen (DE)**

(72) Erfinder: **Hoene, Richard, Dr., Goerresstrasse 27, D-6900 Heidelberg (DE)**
Erfinder: **Bankowsky, Heinz-Hilmar, Otto-Dill-Strasse 1C, D-6710 Frankenthal (DE)**
Erfinder: **Buensch, Hellmut, Dr., Panoramastrasse 81, D-6906 Leimen (DE)**

**EP 0 065 195 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Toluoltiefdruck-Bindemittel

Die Erfindung betrifft Toluoltiefdruck-Bindemittel auf Basis modifizierter Dicyclopentadien-Harze.

Als Rohstoffe für Toluoltiefdruckfarben wurden bisher weitgehend Derivate des Kolophoniums, wie Resinate oder Kolophonium-Phenolharzester eingesetzt. Als natürlich vorkommender Rohstoff ist Kolophonium in besonderem Maße starken Qualitäts-, Verfügbarkeits- und Preisschwankungen unterworfen.

Es hat daher nicht an Versuchen gefehlt, geeignete synthetische Produkte bereitzustellen. Ein relativ gutes Qualitätsniveau besitzen Umsetzungsprodukte aus aromatischen Kohlenwasserstoffharzen mit Maleinsäureanhydrid (= MSA), die mit polyfunktionellen Alkoholen verestert sind und Metallsalzgruppen enthalten. Solche Produkte zeigen aber hinsichtlich ihres Trocknungsverhaltens Nachteile.

Wie der FR-PS 1 407 175 zu entnehmen ist, bieten thermisch polymerisierte Kohlenwasserstoffharze auf Basis Dicyclopentadien (sog. DCPD-Harze) hinsichtlich der Lösemittelabgabe bei Tiefdruckfarben Vorteile. Es wurde daher auch vorgeschlagen, MSA-modifizierte DCPD-Harze mit mehr- und ggf. einwertigen Alkoholen in der Schmelze zu verestern, wobei ggf. Metallverbindungen mitverwendet werden können. Nach diesem Verfahren erhält man aber keine Harze mit hochwertigen Eigenschaften, da das Ausmaß der einstellbaren Säure- und Estergruppen — die für die Pigmentbenetzung maßgeblich sind — durch die von dem Polyol ausgehenden Gelierungs- oder Vernetzungsreaktionen nach oben begrenzt wird. Eine andere inzwischen aufgegebene Patentanmeldung bezog sich auf Mischungen maleinierter DCPD-Harze mit Naturharzen oder synthetischem Kolophonium, die Metallsalzgruppen enthalten, wobei eine gleichzeitige Veresterung möglich ist. Die Funktion der Naturharze in diesen Produkten besteht in einer Verbesserung der Stabilität, des Geruchs, der Reaktivität gegen Metallverbindungen und der Schmelzviskosität.

Gegenüber diesem Stand der Technik bestand die Aufgabe der vorliegenden Erfindung darin, Naturharz-freie Umsetzungsprodukte maleinierter DCPD-Harze aufzuzeigen, die geruchsfrei und stabil sind und bezüglich der Pigmentbenetzung sowie der Lösungsmittelabgabe den hochwertigsten Naturharzderivaten überlegen sind.

Gegenstand der vorliegenden Erfindung sind Toluoltiefdruck-Bindemittel auf Basis von Dicyclopentadien-Harzen, die mit 0,15 bis 0,25 Mol, bezogen auf 100 g Dicyclopentadien-Harz, $\alpha,\beta$-olefinisch ungesättigter Dicarbonsäuren oder deren Anhydriden, wobei diese Dicarbonsäuren in untergeordnetem Maße durch deren Halbester oder Halbamide oder durch $\alpha,\beta$-olefinisch ungesättigte Monocarbonsäuren ersetzt sein können, umgesetzt und mit einwertigen Alkoholen oder Gemischen aus einwertigen und mehrwertigen Alkoholen unter Esterbildung sowie mit Verbindungen zweiwertiger Metalle unter Salzbildung modifiziert worden sind, die dadurch gekennzeichnet sind, daß von den Carbonsäureeinheiten des modifizierten Umsetzungsproduktes

a) 15 bis 40% als freie Carboxylgruppen,
b) 25 bis 45% mit mindestens einem 4 bis 20 Kohlenstoffatomen enthaltenden einwertigen Alkohol verestert,
c) 0 bis 10% mit einem mehrwertigen Alkohol verestert und
d) 25 bis 50% als Salze von Metallen der II. Gruppe des Periodensystems der Elemente, die in untergeordnetem Maße durch Salze von Metallen der I., III. und/oder IV. Gruppe des Periodensystems der Elemente ersetzt sein können,

vorliegen, mit der Maßgabe, daß die Summe der unter a) bis d) genannten Prozentzahlen 100 ist und das modifizierte Umsetzungsprodukt einen K-Wert nach Fikentscher zwischen 9 und 13 aufweist.

Bevorzugt sind solche Toluoltiefdruck-Bindemittel, deren Säurezahl zwischen 20 und 120 und deren Erweichungspunkt nach Kramer-Sarnow-Nagel (= KSN) zwischen 140 und 220°C liegt.

Die Salzbildung erfolgt vorzugsweise in Lösung, wobei insbesondere Oxide, Hydroxide, Carbonate, Formiate und Acetate des Zinks, Calciums und Magnesiums als Verbindungen zweiwertiger Metalle verwendet werden.

Zu den Aufbaukomponenten der erfindungsgemäßen Toluoltiefdruck-Bindemittel ist im einzelnen folgendes auszuführen.

Die Herstellung des als Ausgangsprodukt dienenden Dicyclopentadien-Harzes erfolgt im allgemeinen nach dem Verfahren der Polycycloaddition bei Temperaturen zwischen 220 und 320°C, vorwiegend zwischen 250 und 300°C, und Drücken zwischen 5 und 50 bar. Dafür geeignete Monomere sind Cyclopentadien, Methylcyclopentadien, deren Dimere oder höhere Oligomere. Technisches Dicyclopentadien, welches daneben noch zum Teil ungesättigte Kohlenwasserstoffe des Siedebereichs 30 bis 165°C, wie Isopren, Piperylen oder deren Codimere mit z. B. Cyclopentadien oder deren Codimere mit Butadien enthalten kann, wird bevorzugt eingesetzt. Daneben kann ein Teil, gewöhnlich bis zu einem Drittel, der Cyclopentadien-Einheiten enthaltenden Monomeren durch copolymerisierbare Monomere ersetzt sein. Dazu gehören insbesondere olefinisch ungesättigte Aromaten, wie sie in den sog. Aromatenschnitten der Ethylenherstellung vorkommen, z. B. Styrol, Vinyltoluole, Inden, $\alpha$-Methylstyrol, olefinisch ungesättigte Nitrile, wie Acrylnitril oder Methacrylnitril,

Ester der Acryl- oder Methacrylsäure von Alkanolen mit 1 bis 22 Kohlenstoffatomen, wie z. B. Methylacrylat, Methylmethacrylat, Hydroxyalkyl-(meth-)acrylate, wie Hydroxypropyl-, Hydroxyethyl-, Hydroxybutyl-acrylat oder -methacrylat, Glycidyl(meth)acrylat, Vinylester von Carbonsäuren mit 1 bis 20 Kohlenstoffatomen wie Vinylformiat, -acetat oder -versatat, Allylverbindungen wie Allylalkohol, -acetat, -glycidylether, -chlorid, -alkylether, Butenol, Butendiol, Vinylhalogenide wie Vinylchlorid, Vinylether, wie Methyl-, Ethyl-, Hydroxybutylvinylether, Monoolefine wie Ethen, Propen, Buten, Penten, (Cyclo-)hexen, Dodecen, Octadecen, Alkine wie Acetylen, Propin, Butin sowie deren Aryl-, Alkyl-, Carboxyl-, Hydroxyl- oder Halogenidgruppen tragende Derivate. Die Einsatzmengen dieser Monomeren hängen oft davon ab, wie gut sie sich zur Copolymerisation eignen. In der Regel ist davon auszugehen, daß durch olefinisch ungesättigte Aromaten etwa ein Drittel, jedoch weniger als die Hälfte, sowie durch andere monoolefinische Verbindungen etwa ein Fünftel der Cyclopentadien-Einheiten des DCPD-Harzes ersetzt sein können. Zu den bevorzugten Ausführungsformen des Verfahrens gehört es, technisches Dicyclopentadien mit einer Reinheit von mindestens 80%, das ggf. bis zu 33 Gew.-% olefinisch ungesättigte Aromaten enthält, als Monomeres zu verwenden.

Die Polymerisation kann in Substanz oder in Lösung erfolgen, wobei z. B. Aliphaten, wie Benzine, (Cyclo-)Hexan, Heptan, Aromaten wie Benzol, Toluol, Xylole, Tetralin, Ester wie Ethyl-, Butylacetat, Ketone wie Aceton, Methylethylketon, Ether wie Tetrahydrofuran, Di-n-butylether, Etherester wie Butylglycolacetat, chlorierte Kohlenwasserstoffe wie Ethylenchlorid, (Di)chlorbenzol, sowie Dimethylformamid, oder auch ggf. nicht umgesetzte Einsatz- oder Begleitstoffe der Polymerisations- oder nachfolgenden Modifikationsreaktionen in Frage kommen. Geeignete Reaktionstemperaturen für die thermische Polymerisation, welche ggf. durch den Zusatz von Radikalbildnern erleichtert werden kann, sind 220 bis 320° C, bevorzugt 250 bis 300° C, wobei Reaktionszeiten zwischen 10 Minuten und 10 Stunden sowie verschiedene Varianten der Reaktionsführung, wie kontinuierliche oder diskontinuierliche Fahrweise, möglich sind. Die derart hergestellten Dicyclopentadien-Harze weisen Erweichungspunkte von 50 bis 200° C und K-Werte (2%ig in THF gemessen nach DIN 53 726) von 8 bis 10 auf.

Harze mit zu niedrigen K-Werten ergeben nach der weiteren Modifikation keine Produkte ausreichender Viskosität; aus Harzen mit zu hohen K-Werten dagegen werden Endprodukte mit ungenügender Viskositätsstabilität erhalten.

Zur Herstellung eines Säuregruppen-modifizierten Harzes wird das Dicyclopentadien-Harz mit 0,15 bis 0,25 Mol, bezogen auf 100 g Dicyclopentadien-Harz, einer $\alpha,\beta$-olefinisch ungesättigten Dicarbonsäure oder deren Anhydrid umgesetzt, wobei diese in untergeordnetem Maße durch deren Halbester oder Halbamide oder $\alpha,\beta$-olefinisch ungesättigte Monocarbonsäuren ersetzt sein können.

Bevorzugt wird zur Herstellung des Säuregruppen-modifizierten Harzes Maleinsäureanhydrid verwendet, das bis zu 30 Mol-% durch andere ungesättigte Dicarbonsäuren oder deren Derivate, wie Malein-, Fumar-, Citracon- und Itaconsäure oder deren Halbester oder Halbamide mit 1 bis 20 C-Atomen im Alkylrest, ersetzt sein können. Der Anteil an ungesättigten Säurekomponenten ist von großer Bedeutung für das Eigenschaftsbild der Tiefdruckharze: Anteile unter 0,15 Mol, bezogen auf 100 g DCPD-Harz, ergeben Endprodukte mit unzureichendem Glanz; Anteile über 0,25 Mol führen zu tiefer Verfärbung und oft zur Gelierung der Ansätze.

Die Säuremodifizierung kann in Lösung oder Substanz, ggf. unter Zusatz von Radikalbildnern, bei Temperaturen zwischen 220 und 270° C während 10 Minuten bis 10 Stunden durchgeführt werden; auch hier sind sowohl kontinuierliche als auch diskontinuierliche Verfahrensweisen anwendbar. Die derart erhaltenen Säure-modifizierten Dicyclopentadien-Harze unterscheiden sich hinssichtlich Erweichungspunkt und K-Wert nicht wesentlich von den Ausgangsprodukten; die K-Werte betragen gewöhnlich 8,5 bis 10,5.

Es ist nicht unbedingt erforderlich, das Säure-modifizierte Dicyclopentadien-Harz in 2 oder mehreren Stufen herzustellen. Es kann auch ein einstufiges Verfahren gewählt werden, wobei Dicyclopentadien, ggf. zusammen mit Styrol und/oder anderen Comonomeren und die $\alpha,\beta$-olefinisch ungesättigte Dicarbonsäure oder deren Derivat z. B. Maleinsäureanhydrid gemeinsam während 10 Minuten bis 10 Stunden auf Temperaturen von 220 bis 320° C, bevorzugt 250 bis 300° C, ggf. unter Zusatz von Radikalbildnern, erhitzt werden.

Die weitere Umsetzung der Säuregruppen-modifizierten Dicyclopentadien-Harze besteht in der Veresterung mit einem einwertigen Alkohol oder einem Gemisch aus einwertigem und mehrwertigem Alkohol, und einer Salzbildung. Hier kann ein- oder mehrstufig vorgegangen werden, wobei die Reihenfolge der Umsetzungen beliebig ist. Eines der möglichen mehrstufigen Verfahren besteht darin, zunächst die Esterbildung, in Lösung oder Substanz, ggf. bereits während der Herstellung der Säure-modifizierten Dicyclopentadien-Harze, vorzunehmen, woran sich der Reaktionsschritt der Salzbildung anschließt. Dafür kommt im allgemeinen ein Temperaturbereich zwischen 100 und 320° C in Betracht. Als einwertige Alkohole, die in dem Maße eingesetzt werden, daß sie im Endprodukt 15 bis 40% der Säuregruppen als Ester binden, kommen aliphatische Alkohole mit 4 bis 20 Kohlenstoffatomen oder araliphatische Alkohle in Frage, z. B. Butanole, Hexanole, Benzylalkohol, Octanole, wie 2-Ethylhexanol, Nonanole, Decanole, wie iso-Decanol, Dodecyl-, Tridecylalkohole, Stearylalkohole, oder deren Gemische, ebenso Etheralkohole wie Methyl-, Ethyl-, Butylglykol, Methyl-, Ethyl-, Butyldiglykol, Methyl-, Ethyl-, Butyltriglykol oder andere Etheralkohole der allgemeinen Formel

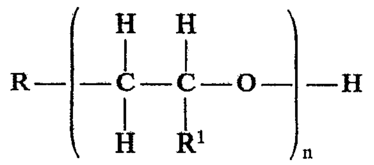

worin R für einen aliphatischen, aromatischen oder araliphatischen Rest mit bis zu 10 C-Atomen, $R^1$ für Wasserstoff oder eine Methylgruppe stehen und n = 1 bis 3 ist, wobei die Alkohole einzeln oder im Gemisch, ggf. unter Zusatz geringfügiger Anteile von Veresterungskatalysatoren, wie z. B. Aminoverbindungen oder organischen Sulfonsäuren eingesetzt werden können.

(Ether-)Alkohole mit 4 bis 20 C-Atomen sind besonders bevorzugt, weil sie die Glanzeigenschaften der Harze besonders positiv beeinflussen.

Ein zu geringer Umsetzungsgrad der verwendeten Alkohole bewirkt unzureichenden Glanz und Instabilität aufgrund hoher Säurezahlen; bei Umsetzungsgraden über 40% wird das Trocknungsverhalten verschlechtert.

Es ist gelegentlich angebracht, aber nicht zwingend erforderlich, zusätzlich mehrfunktionelle Alkohole einzusetzen, wobei es unerheblich ist, ob sie vor, nach, oder gleichzeitig mit den Monoalkoholen zugegeben werden. Solche mehrwertigen Alkohole, die nach der Veresterung einen Anteil von 0 bis 10%, vorzugsweise weniger als 5% der Carboxylgruppen beanspruchen sollen, sind z. B. Diole, wie Ethylenglykol, Propylenglykol, Butan-, Pentan-, Hexandiole, Dimethylolcyclohexan, Diphenylolpropan, Triole wie Trimethylolethan, -propan, -butan, Glycerin, höherwertige Alkohole wie (Penta-)Erythrit, Formosen, Dipentaerythrit, Sorbit, Mannit, Dulcit, ggf. auch Phenolharze, Ketonharze, Aldehydharze, sowie (Co)polymerisate Hydroxyl-funktioneller olefinischer Monomerer wie Polymerisate des Hydroxypropylacrylats, Styrol-Allylalkohol-Copolymerisate oder ggf. Stickstoffgruppenhaltige, OH-funktionelle Präpolymere von Polyether- oder Polyesterolen. Die Polyalkohole können einzeln oder im Gemisch verwendet werden. Während geringe Mengen dieser polyfunktionellen Alkohole einen ggf. erwünschten Viskositätsanstieg bewirken, führen größere Anteile gewöhnlich zur Vernetzung, welche entweder bereits während der Veresterungsreaktion oder in einem der nachfolgenden Schritte, z. B. der Entgasung, beobachtet wird. Unerwünschte Vernetzung wird bei den Produkten dann nicht beobachtet, wenn weniger als 5% der Carbonsäureeinheiten als Ester mehrwertiger Alkohole gebunden vorliegen.

Erfindungsgemäß liegen die Carbonsäureeinheiten der Toluoltiefdruckharze zu 25 bis 50% als Salze von Metallen der II. Gruppe des Periodensystems der Elemente vorzugsweise von Zink, Calcium und/oder Magnesium vor. Für die Salzbildungsreaktion eignen sich z. B. insbesondere die Oxide, Hydroxide, Carbonate oder Carboxylate, wie z. B. Formiate oder Acetate dieser Metalle, wobei diese in untergeordnetem Maße, ggf. bis zu einem Drittel durch Salze von Metallen der I. bis IV. Gruppen des Periodensystems der Elemente, wie Natrium, Kalium, Aluminium, Titan, Silicium, Zinn oder auch durch Ammoniumsalze ersetzt sein können.

Wesentlich ist, daß das Ausmaß der Salzbildung den Wert von 25%, bezogen auf die Gesamtzahl der Carbonsäureeinheiten, nicht unterschreitet. Vom Ausmaß der Salzbildung hängt es ab, ob die Lösungsmittelabgabe der Tiefdruckharze den Ansprüchen genügt. Wenn nämlich z. B. ein Säure-modifiziertes Dicyclopentadien-Harz mit K-Wert 9 ohne oder mit zu geringer Salzbildung verwendet wird, ist dessen Erweichungspunkt und Lösungsmittelabgabe gewöhnlich unzureichend und auch nicht durch Verestern mit mehrwertigen Alkoholen wesentlich zu verbessern. Den gewünschten Effekt, d. h. Anhebung von Viskosität, Trocknung und Erweichungspunkt, erreicht man überraschenderweise dadurch, daß man 25 bis 50% der Carboxylgruppen in ihre Salze überführt. Produkte mit zu hohem Gehalt an Salzgruppen sind zu wenig löslich und zu schwer schmelzbar.

Es hat sich gezeigt, daß nach den bisher bekannten Verfahrensweisen, z. B. mittels Salzbildung in der Schmelze, derartige Umsetzungsgrade nicht erreichbar sind. Ein weiterer vorteilhafter Aspekt der erfindungsgemäßen Harze besteht darin, daß die Salzbildung, ggf. unter gleichzeitiger Veresterung, zweckmäßigerweise in Lösung bei 100 bis 200° C unter Anwesenheit katalytisch wirkender flüchtiger Säuren, z. B. Essigsäure, Ameisensäure, Acrylsäure, Propionsäure oder Milchsäure, besonders vorteilhaft durchgeführt werden kann, wobei das entstehende Reaktionswasser azeotrop abdestilliert werden kann.

Wird diese Salzbildung in der Schmelze entsprechend DE-OS 2 356 324 vorgenommen, so verläuft sie, auch nach vorheriger Öffnung der Anhydridgruppen durch Halbesterbildung, unvollkommen, unter teilweiser Rückspaltung der Halbester, und ergibt Harze mit gelierten Anteilen und schlechtem Glanz. Wählt man ein Zweiphasen-Umsetzungsverfahren, etwa nach DE-OS 2 215 268, wo die organisch gelöste Phase der Halbester-modifizierten Harze mit einer wäßrigen Salzlösung umgesetzt wird, verläuft die Umsetzung äußerst langsam; weiterhin beobachtet man bei der nachfolgenden Entgasung einen Abbau der Estergruppen unter Rückbildung der Carboxyl- oder Anhydridgruppen.

Es wurde oben bereits erläutert, daß hochwertige Toluoltiefdruckharze unter Bindung von 25 bis 50% der Carbonsäureeinheiten als Salze besonders dann sehr vorteilhaft herstellbar sind, wenn in Lösung gearbeitet wird, wobei der Zusatz flüchtiger Carbonsäuren gelegentlich Vorteile bringt. Dabei

ist es möglich, als Metallverbindungen die preiswerteren Oxide einzusetzen, was einen erheblichen Vorteil darstellt. Der Temperaturbereich von 100 bis 200° C ist für diese Umsetzung vorzuziehen, da bei höheren Temperaturen gewöhnlich schlechtere Glanzeigenschaften beobachtet werden, während unter 100°C die Umsetzung sehr langsam verläuft. Die Salzbildung zur Herstellung der erfindungsgemäßen Produkte kann weiter unter Zusatz anderer katalytisch wirkender Agentien, z. B. Amine, Phosphine, Metallseifen, Metallalkoholate, oder Metallkomplexverbindungen, oder ggf. auch nicht-flüchtiger Säuren, wie p-Toluolsulfonsäure, Dodecylbenzolsulfonsäure, Stearinsäure oder Kolophonium erfolgen. Der Anteil der flüchtigen organischen Säuren bewegt sich im allgemeinen um 10 bis 200 Mol-%, bezogen auf 1 Mol Metallverbindung. Je nach Mengenanteil und Reaktionstemperatur liegt die für die Salzbildung erforderliche Reaktionszeit zwischen 10 Minuten und 10 Stunden.

Zur weiteren Modifikation oder Konfektionierung der Toluoltiefdruckharze können diese, ggf. auch während der Polymerisations- oder Modifikationsschritte, mit reaktiven Zuschlägen versehen werden, welche für solche Bindemittel üblicherweise in Betracht kommen. Dazu gehören Phenole, wie Phenol, Kresol, Butylphenole, Octylphenole, Bisphenole, wie Diphenylolmethan, Hydrochinon, oder Di-t-butyl-p-Kresol, welche zum Teil eine Stabilisierung gegen Autoxidation bewirken, Phenol-, Harnstoff-, Melamin- oder Benzoguanaminharze, Kolophonium oder Kolophoniumharze, Keton-, Aldehydharze, Resinate, welche zur Verbesserung der Verträglichkeit oder der Trocknung beitragen können, Kohlenwasserstoffharze, Cumaron-, Styrol-, Inden-, Terpenharze oder -copolymerisate, Polyisocyanate, (Meth)Acrylatharze, Chlorparaffinharze, Nitrocellulose, Alkydharze, ungesättigte Polyester, ungesättigte natürliche oder synthetische Öle, Stellmittel wie Bentonit, Wachse wie Polyethylen- oder Carnaubawachs, Viskositäts-steigernde Zusätze wie Chlorkautschuke, (Poly)Isocyanate, (Poly)Epoxide oder Polyurethane, einzeln oder im Gemisch; deren Mengen betragen jedoch selten mehr als 20 Gew.-%, bezogen auf die Menge des Endproduktes.

Wie die Herstellung des Säure-modifizierten Dicyclopentadien-Harzes diskontinuierlich oder kontinuierlich erfolgen kann, ist es auch möglich, die weiteren Modifikationsreaktionen sowohl diskontinuierlich als auch kontinuierlich durchzuführen; hier allerdings bietet sich gewöhnlich das diskontinuierliche Verfahren als vorteilhafter an.

Nach Abschluß aller Umsetzungen verbleibt ein Teil, gewöhnlich 15 bis 40%, der Carboxylgruppen nicht umgesetzt. Es ist zwar möglich, den Umsetzungsgrad noch weiter zu steigern, doch ist das wegen der dann erforderlichen Reaktionszeiten in der Regel nicht sinnvoll. Es hat sich außerdem gezeigt, daß Toluoltiefdruck-Bindemittel, um eine optimale Pigmentbenetzung zu gewährleisten, einen Anteil an freien Carboxylgruppen aufweisen sollten. Wegen der verschlechterten Viskositätsstabilität bei höheren Säurezahlen sind Säurezahlen der erfindungsgemäßen Toluoltiefdruckharze zwischen 20 und 120, insbesondere zwischen 25 und 80 bevorzugt. Da, sofern polyfunktionelle Alkohole eingesetzt werden, diese gewöhnlich nur zum Teil verestert werden sollen, betragen die Hydroxylzahlen der Harze im allgemeinen 0 bis 100, vorzugsweise 0 bis 50. Die K-Werte der erfindungsgemäßen Harze liegen gewöhnlich etwas höher als die der ursprünglichen Dicyclopentadien-Harze, sie betragen 9 bis 13, vorzugsweise 10 bis 12. Die entsprechenden Molekulargewichtszahlenmittel liegen im allgemeinen im Bereich zwischen 700 und 1500.

Nach Abschluß der Reaktionen werden die erfindungsgemäßen Harze üblicherweise von flüchtigen Bestandteilen, wie Lösungsmitteln, nicht-umgesetzten Mono- oder Oligomeren, Alkoholen oder Säuren durch Destillation, ggf. im Vakuum befreit. Dies erfolgt gewöhnlich oberhalb der Erweichungspunkte der Harze bei Temperaturen von 150 bis 200° C; bei höheren Temperaturen kann es zu Vernetzungsreaktionen kommen. Die Abtrennung der flüchtigen Anteile läßt sich diskontinuierlich oder auch kontinuierlich, z. B. im Entgasungsextruder, durchführen. Es ist nicht unbedingt erforderlich, die bei der Entgasung anfallenden Destillate zu verwerfen. Es hat sich überraschenderweise sogar gezeigt, daß die bei den verschiedenen Reaktionsstufen ggf. anfallenden Destillate in vielen Fällen, z. B. bei der Herstellung der Säure-modifizierten Dicyclopentadien-Harze, wieder als Lösungsmittel einsetzbar sind, wodurch die kostengünstige Möglichkeit genutzt werden kann, nicht-umgesetzte Einsatzstoffe wieder zur Reaktion heranzuziehen.

Die erfindungsgemäßen Toluoltiefdruckharze besitzen überlegene Eigenschaften hinsichtlich Stabilität, Trocknung, Verträglichkeit, Stand auf dem Papier und Glanz, zusammen mit den verschiedensten Pigmenten, Füllstoffen, Harzen oder anderen Zusätzen. In der Summe dieser Eigenschaften sind sie allen bisher bekannten Kolophonium-Derivaten, auch den Spitzenprodukten, wie den Phenol-Kolophonium-Harzen, überlegen. Die Art und Weise ihrer Herstellung gestattet eine hohe Gleichmäßigkeit der Produktqualität.

Aufgrund ihrer preiswerten Einsatzstoffe sind sie billiger herzustellen als z. B. die Phenol-Kolophonium-Harze. Die Viskosität der Harze, gemessen als DIN-4-Becher-Auslaufzeit der 50%igen Lösung in Toluol, beträgt im allgemeinen 15 bis 1000, vorzugsweise 20 bis 300 Sekunden. Ihre Erweichungspunkte nach KSN liegen im allgemeinen zwischen 140 und 200° C; sie können ggf. auch höher liegen, wenn die Harze besonders sorgfältig entgast wurden.

Die in den nachfolgend aufgeführten Beispielen genannten Prozente und Teile beziehen sich, wenn nicht anders angegeben, auf das Gewicht.

Die Bestimmung des K-Wertes erfolgt nach H. Fikentscher, Cellulosechemie 13 (1932), S. 58 ff., an der 2%igen Lösung in THF bzw. nach DIN 53 726.

Die Erweichungspunkte (EP) der Harze werden auf der Kofler-Heizbank ermittelt. Dabei wird diejenige Temperatur der Heizplatte angegeben, bei welcher die Harzprobe anzukleben beginnt.

Die Säurezahl (SZ) wird gemäß DIN 53 402 potentiometrisch gemessen und in mg KOH/g Substanz angegeben. Bei der Bestimmung von Anhydrid-Gruppen wird mittels dieser Methode immer nur eine der beiden Carboxylgruppen erfaßt. Bei der Messung der OH-Zahl (OHZ) erfolgt die Acylierung mit Phthalsäureanhydrid/Pyridin im Druckrohr, Hydrolyse und Titration mit KOH-Lösung analog DIN 53 402; Angabe in mg KOH/g Substanz.

### Herstellung der Anhydrid-modifizierten DCPD-Harze

#### Harz I

In einem Rührautoklaven werden unter Stickstoff 2840 Teile Dicyclopentadien (= DCPD) (Reinheitsgrad 96%), 400 Teile Vinyltoluol, 1360 Teile Xylol und 427 Teile Maleinsäureanhydrid erhitzt und 2 Stunden bei 268 bis 273°C und ca. 13 bar umgesetzt. Nach dem Abkühlen auf 230°C werden weitere 400 Teile Maleinsäureanhydrid zugefügt und 2 Stunden bei dieser Temperatur umgesetzt. Das Produkt wird im Vakuum entgast; man erhält 4065 Teile eines Harzes mit einer Säurezahl von 115 und einem K-Wert von 9,8. Das Destillat weist eine Säurezahl von 11,2 und einen Dicyclopentadien-Gehalt von 0,7% auf.

#### Harz II

In einem Rührautoklaven werden unter Stickstoff 140 Teile DCPD (Reinheitsgrad 96%), 77 Teile Ethylbenzol und 10 Teile Vinylacetat 2 Stunden bei 270 bis 275°C und ca. 14 bar umgesetzt. Das gelöste Harz weist den K-Wert 9,2 auf. Nach dem Abkühlen auf 235°C werden 37 Teile Maleinsäureanhydrid zugefügt und 2 Stunden bei dieser Temperatur umgesetzt. Das Produkt wird im Vakuum entgast; man erhält 183 Teile eines Harzes mit einer Säurezahl von 113 und einem K-Wert von 10,3.

#### Harz III

In einem Rührautoklaven werden unter Stickstoff 500 Teile DCPD (Reinheitsgrad 96%), 100 Teile des bei Harz I angefallenen Destillats, 37 Teile Toluol, 30 Teile Cyclohexan, 105 Teile Maleinsäureanhydrid und 5 Teile Methacrylsäure bei 268 bis 272°C und ca. 14 bar 2 Stunden umgesetzt. Nach dem Entgasen erhält man 608 Teile eines Harzes mit einer Säurezahl 102 und einem K-Wert von 9,3.

#### Harz IV

In einem Rührautoklaven werden unter Stickstoff 114 Teile DCPD (Reinheitsgrad 94%), 35 Teile Benzol und 6 Teile Maleinsäureanhydrid 1 Stunde auf 270 bis 274°C erhitzt, anschließend werden bei 240°C 24 Teile Maleinsäureanhydrid zugefügt und 1 Stunde umgesetzt. Nach dem Abdestillieren der flüchtigen Anteile im Vakuum werden 144 Teile eines Harzes mit einer Säurezahl von 114 und einem K-Wert von 10 erhalten.

### Herstellung der Toluol-Tiefdruckbindemittel aus den Säuregruppen-modifizierten Dicyclopentadien-Harzen

#### Beispiel 1

In einem Rührbehälter mit Rückflußkühler und Wasserauskreiser werden 400 Teile Harz I in 260 Teilen Xylol bei 170°C gelöst und 1 Stunde mit 82 Teilen Iso-Decanol verestert. Dazu fügt man 22 Teile Zinkoxid, 7,6 Teile Sorbit und 17 Teile Essigsäure und trennt das freiwerdende Reaktionswasser über einen Wasserauskreiser ab. Die nach etwa 30 Minuten erhaltene klare Lösung wird bei 20 mbar und 170°C von den flüchtigen Bestandteilen befreit und ausgetragen.

#### Beispiel 2 und 3

Man verfährt wie in Beispiel 1, verwendet aber als Ausgangsprodukte die Harze III und IV.

Beispiel 4

In einem Rührbehälter mit Rückflußkühler und Wasserauskreiser werden 400 Teile Harz II in 260 Teilen Ethylbenzol während 2 Stunden bei 160°C mit 100 Teilen Stearylalkohol verestert. Man fügt 70 Teile Zinkacetat-Dihydrat zu und destilliert das Reaktionswasser bei 150°C azeotrop ab. Nach 6 Stunden erhält man ein klares Reaktionsgemisch, welches bei 180°C und 20 mbar von den flüchtigen Bestandteilen befreit und ausgetragen wird.

Beispiel 5

In einem Rührbehälter mit Rückflußkühler und Wasserauskreiser werden 2799 Teile Harz II in 2149 Teilen Toluol unter Eigendruck bei 180°C mit 421 Teilen Tridecylalkohol während 2 Stunden verestert. Anschließend fügt man innerhalb 1/2 Stunde eine Suspension aus 124,6 Teilen Zinkoxid, 98 Teilen Essigsäure und 394 Teilen Toluol zu und destilliert bei ca. 140°C unter Eigendruck nach 1,5 Stunden 1031 Teile der flüchtigen Bestandteile ab. Danach fügt man 278 Teile n-Butanol zu und hält weitere 4 Stunden am Rückfluß; danach werden die flüchtigen Bestandteile, welche nicht umgesetztes Butanol enthalten, bei 200°C und 10 mbar abgetrennt.

Beispiel 6

Man verfährt wie in Beispiel 1, verwendet aber ein Gemisch aus 12 Teilen Zinkcarbonat, 11,5 Teilen Calciumcarbonat und 2,5 Teilen Magnesiumcarbonat.

Beispiel 7

Zu 150 Teilen des Harzes II in 71 Teilen p-Xylol und 100 Teilen Toluol werden bei 150°C unter Rühren und Rückfluß 23 Teile n-Decanol gegeben. Nach einstündiger Umsetzung wird eine Suspension von 6,7 Teilen ZnO, 15 Teilen Cyclohexanol, 20 Teilen Toluol und 10 Teilen Ameisensäure zugefügt und das Reaktionswasser während 4 Stunden ausgekreist. Der Ansatz wird bei 185°C und 15 mbar von seinen flüchtigen Bestandteilen befreit, welche u. a. nicht-umgesetztes Cyclohexanol enthalten.

Beispiel 8

150 Teile des Harzes II in 121 Teilen Benzol werden unter Eigendruck bei 120°C mit 30 Teilen Butylglycol während 1 Stunde unter Rühren und Rückfluß umgesetzt. Danach wird eine Suspension aus 8,4 Teilen ZnO, 25 Teilen Xylol, 6 Teilen Eisessig und 0,5 Teilen Dodecylbenzolsulfonsäure zugefügt und das Reaktionswasser während 5 Stunden ausgekreist. Die flüchtigen Bestandteile, welche noch etwas Butylglykol enthalten, werden bei 190°C und 45 mbar abgetrennt.

Beispiel 9

300 Teile des Harzes I, die in 316 Teilen Toluol gelöst vorliegen, werden 1/2 Stunde mit 8 Teilen Trimethylolpropan und anschließend 1/2 Stunde mit 78 Teilen Iso-Decanol unter Rühren und Rückfluß umgesetzt. Danach wird eine Suspension aus 24 Teilen ZnO, 5 Teilen Iso-Decanol, 60 Teilen Xylol und 23 Teilen Eisessig zugefügt; das Reaktionswasser wird innerhalb von 5 Stunden ausgekreist. Man erhält daraus ein Toluoltiefdruckharz durch Evakuieren bei 180°C und 21 mbar.

Beispiel 10

150 Teile Harz IV, 100 Teile Tetralin und 58 Teile Toluol werden bei 140°C gelöst und mit einer Suspension aus 7,75 Teilen ZnO, 22,6 Teilen Iso-Decanol, 10 Teilen 2-Ethylhexanol, 3,1 Teilen Pentaerythrit, 11 Teilen Essigsäure und 2,2 Teilen eines aus 912 Teilen Bisphenol A und 648 Teilen 37%igem Formaldehyd unter Zusatz von Dimethylethanolamin 70%ig in Wasser/Isopropanol hergestellten Harzes versetzt, 30 Minuten am Rückfluß gekocht und anschließend azeotrop vom Reaktionswasser innerhalb von 2 Stunden befreit. Der Ansatz wird schließlich durch Entgasen bei 180°C und 15 mbar von den flüchtigen Bestandteilen befreit.

Beispiel 11

Unter Rühren und Rückfluß werden 400 Teile Harz I in 260 Teilen Xylol mit 82 Teilen Iso-Decanol, 21 Teilen Zinkoxid und 7,6 Teilen Sorbit in Gegenwart von 250 Teilen Wasser 8 Stunden umgesetzt. Anschließend werden 60 Teile Kolophonium zugefügt und der Ansatz bei 170°C und 22 mbar von flüchtigen Bestandteilen befreit.

Vergleichsbeispiel 1

Man verfährt wie in Beispiel 1, führt aber die Umsetzung unter Verzicht auf Essigsäure und Xylol bei 240°C in der Schmelze durch. Das Produkt ist nach 3 Stunden geliert und teilweise unlöslich, während es noch 10 Teile nicht-umgesetztes Zinkoxid enthält.

Wie das Vergleichsbeispiel zeigt, entstehen durch Umsetzung in der Schmelze teilweise gelierte Produkte, die sich als Tiefdruckbindemittel nicht eignen.

Die charakteristischen Kenndaten der nach den Beispielen erhaltenen Tiefdruckbindemittel finden sich in der nachfolgenden Tabelle 1.

Tabelle 1

| Beispiel Nr. | Ausbeute (Teile) | Säurezahl (Anteil freier COOH-Gruppen) | EP (n.KSN) (° C) | K-Wert n.Fikentscher | Metallgehalt (%) | OH-Zahl |
|---|---|---|---|---|---|---|
| 1 | 505 | 57,2 | 162 | 11,0 | 3,6 Zn | 23,7 |
| 2 | 501 | 47,5 | 175 | 11,1 | 3,5 Zn | 18,2 |
| 3 | 507 | 60,0 | 157 | 10,7 | 3,5 Zn | 20,9 |
| 4 | 519 | 62,4 | 151 | 10,9 | 3,9 Zn | – |
| 5 | 3485 | 59,0 | 148 | 11,3 | 2,9 Zn | – |
| 6 | 500 | 61,6 | 165 | 10,9 | 1,7 Zn | 25,4 |
| | | | | | 1,0 Ca | |
| | | | | | 0,1 Mg | |
| 7 | 186 | 62,3 | 148 | 10,8 | 2,9 Zn | – |
| 8 | 179 | 70,1 | 150 | 11,0 | 3,6 Zn | – |
| 9 | 396 | 29,2 | 171 | 10,9 | 4,7 Zn | 25,2 |
| 10 | 186 | 68,1 | 166 | 10,7 | 3,3 Zn | 26,6 |
| 11 | 560 | 69,2 | 180 | 11,1 | 3,0 Zn | 19,6 |

Prüfung der Druckeigenschaften

Zur anwendungstechnischen Prüfung werden die Harze 50%ig in Toluol gelöst und mit Toluol bei 20°C auf eine DIN-4-Becher-Auslaufzeit von 14 Sekunden eingestellt. 138 Teile dieser verdünnten Harzlösung und 12 Teile Pigment werden unter Zusatz von Stahlkugeln in einer Laborschwingkugelmühle während 30 Minuten angerieben. Die Viskosität der so erhaltenen Druckfarbe wird vor und nach einer Lagerung von 3 Tagen bei 50°C im DIN-4-Auslaufbecher bestimmt. Der Unterschied der Werte liefert ein Maß für die Lagerstabilität der Farben.

Zur Prüfung werden die Farben mit einer 15-μm-Drahtrakel auf Tiefdruckpapier aufgezogen. Als Maß der Trocknungsgeschwindigkeit gilt die Zeit, ab der der Aufstrich mit einem durch eine Stahlwalze von 1000 g Gewicht aufgepreßten Streifen Tiefdruckpapier nicht mehr verklebt; diese Messung wird durch 4maliges Überrakeln der Farbe 4mal wiederholt.

Die Messung des Glanzes erfolgt mit einem Gardner-Glanzmeßgerät bei einem Winkel von 30°C. Zum Vergleich wird ein handelsübliches Phenol/Kolophoniumharz sowie ein modifiziertes Kohlenwasserstoffharz auf Basis eines kationisch polymerisierten $C_9$-Schnittes mitgeprüft. Die Ergebnisse sind in Tabelle 2 wiedergegeben. Sie demonstrieren die technische Überlegenheit der erfindungsgemäßen Toluoltiefdruckharze. Buchstabe H kennzeichnet dabei ein Blaupigment Pigment Blue 15:1, Color Index 74 160; Buchstabe L kennzeichnet ein Rotpigment Pigment Red 57:1, Color Index 15 850:1.

Tabelle 2

Prüfung der Druckeigenschaften

| | Viskosität 50%ig in Toluol*) | Konzentr. (%) bei 14 s Auslaufzeit | Viskosität d. Farbe*) sofort | n. 3 d 50° | Trocknung (s) | Glanz |
|---|---|---|---|---|---|---|
| 1 | 90 | 34,7 | 24,8 H | 25,9 H | H 29; 29; | 52 H |
| | | | 15,0 L | 15,2 L | 30; 30; 29 | 50 L |
| 2 | 71 | 35,2 | 23,2 H | 27,2 H | H 28; 32; | 49 H |
| | | | 14,8 L | 16,0 L | 29; 29; 29 | 49 L |
| 3 | 105 | 35,0 | 22,8 H | 23,3 H | H 30; 33; | 53 H |
| | | | 15,2 L | 16,7 L | 34; 29; 28 | 45 L |
| 4 | 80 | 36,1 | 24,0 H | 24,4 H | H 29; 27; | 47 H |
| | | | 15,3 L | | 32; 36; 36 | 52 L |
| 5 | 94 | 35,9 | 22,8 H | 23,1 H | H 30; 30; | 46 H |
| | | | 15,1 L | 15,6 L | 33; 32; 32 | 48 L |
| 6 | 91 | 35,7 | 20,7 H | 22,9 H | H 26; 31; | 51 H |
| | | | 14,9 L | 15,9 L | 31; 29; 29 | 52 L |
| 7 | 71 | 34,1 | 25,9 H | 28,7 H | H 24; 24; | 55 H |
| | | | 13,9 L | 15,5 L | 27; 30; 37 | 39 L |
| 8 | 103 | 35,3 | 27,8 H | 33,5 H | H 29; 29; | 56 H |
| | | | 15,7 L | 18,1 L | 31; 30; 34 | 52 L |
| 9 | 176 | 34,8 | 29,7 H | 30,3 H | H 27; 27; | 44 H |
| | | | 16,3 L | 17,3 L | 31; 28; 28 | 52 L |
| 10 | 110 | 34,6 | 28,7 H | 29,9 H | H 28; 30; | 47 H |
| | | | 16,1 L | 16,5 L | 30; 29; 32 | 47 L |

Fortsetzung

Prüfung der Druckeigenschaften

| | Viskosität 50%ig in Toluol*) | Konzentr. (%) bei 14 s Auslaufzeit | Viskosität d. Farbe*) sofort | n. 3 d 50° | Trocknung (s) | Glanz |
|---|---|---|---|---|---|---|
| 11 | 909 | 33,4 | 26,6 H | 35,7 H | H 30; 29; | 43 H |
| | | | 17,1 L | 17,2 L | 28; 31; 31 | 39 L |
| Phenol-Kolophonium-Harz | 215 | 34,6 | 39,0 H | 70,7 H | H 30; 33; | 42 H |
| | | | 18,2 L | 22,2 L | 32; 33; 34 | 40 L |
| Modifiziertes KW-Harz | 52 | 37,4 | 51,0 H | 90,8 H | H 37; 38; | 46 H |
| | | | 18,3 L | 26,7 L | 40; 38; 43 | 48 L |

*) Auslaufzeit, gemessen im DIN-4-Becher (s).

**Patentansprüche**

1. Toluoltiefdruck-Bindemittel auf Basis von Dicyclopentadien-Harzen, die mit 0,15 bis 0,25 Mol, bezogen auf 100 g Dicyclopentadien-Harz, $\alpha,\beta$-olefinisch ungesättigter Dicarbonsäuren oder deren Anhydriden, wobei diese Dicarbonsäuren in untergeordnetem Maße durch deren Halbester oder Halbamide oder durch $\alpha,\beta$-olefinisch ungesättigte Monocarbonsäuren ersetzt sein können, umgesetzt und mit einwertigen Alkoholen oder Gemischen aus einwertigen und mehrwertigen Alkoholen unter Esterbildung sowie mit Verbindungen zweiwertiger Metalle unter Salzbildung modifiziert worden sind, dadurch gekennzeichnet, daß von den Carbonsäureeinheiten des modifizierten Umsetzungsproduktes

a) 15 bis 40% als freie Carboxylgruppen,
b) 25 bis 45% mit mindestens einem 4 bis 20 Kohlenstoffatome enthaltenden einwertigen Alkohol verestert,
c) 0 bis 10% mit einem mehrwertigen Alkohol verestert und
d) 25 bis 50% als Salze von Metallen der II. Gruppe des Periodensystems der Elemente, die in untergeordnetem Maße durch Salze von Metallen der I., III. und/oder IV. Gruppe des Periodensystems der Elemente ersetzt sein können,

vorliegen, mit der Maßgabe, daß die Summe der unter a) bis d) genannten Prozentzahlen 100 ist und das modifizierte Umsetzungsprodukt einen K-Wert nach Fikentscher zwischen 9 und 13 aufweist.

2. Toluoltiefdruck-Bindemittel nach Anspruch 1, dadurch gekennzeichnet, daß sie Säurezahlen zwischen 20 und 120 und Erweichungspunkte nach Kramer-Sarnow-Nagel zwischen 140 und 220°C aufweisen.

3. Toluoltiefdruck-Bindemittel nach Anspruch 1 oder 2, dadurch gekennzeichnet, daß die Salzbildung in Lösung erfolgt ist.

4. Toluoltiefdruck-Bindemittel nach einem der vorhergehenden Ansprüche, dadurch gekennzeichnet, daß die Salzbildung mit Oxiden, Hydroxiden, Carbonaten, Formiaten oder Acetaten des Zinks, Calciums, Magnesiums oder Mischungen davon erfolgt ist.

**Claims**

1. A toluene-soluble binder for gravure printing, based on dicyclopentadiene resins which have been reacted with 0.15 to 0.25 mole, based on 100 g of dicyclopentadiene resin, of $\alpha,\beta$-olefinically unsaturated dicarboxylic acids or their anhydrides, it being possible for these dicarboxylic acids to be replaced to a minor extent by their half-esters or half-amides or by $\alpha,\beta$-olefinically unsaturated monocarboxylic acids, and have been modified with monohydric alcohols or mixtures of monohydric and polyhydric alcohols, with ester formation, and with compounds of divalent metals, with salt formation, wherein, of the carboxylic acid units of the modified reaction product,

a) 15 to 40% are present in the form of free carboxyl groups,
b) 25 to 45% have been esterified with at least one monohydric alcohol of 4 to 20 carbon atoms,
c) 0 to 10% have been esterified with a polyhydric alcohol, and
d) 25 to 50% are present in the form of salts of group II of the periodic table, which may be replaced to a minor extent by salts of metals of groups I, III and/or IV of the periodic table,

with the proviso that the sum of the percentages indicated under a) to d) is 100, and the modified reaction product has a K value according to Fikentscher of from 9 to 13.

2. A toluene-soluble binder for gravure printing as claimed in claim 1, which has an acid number of from 20 to 120 and a softening point according to Kramer-Sarnow-Nagel of from 140 to 220° C.

3. A toluene-soluble binder for gravure printing as claimed in claim 1 or 2, wherein salt formation es effected in solution.

4. A toluene-soluble binder for gravure printing as claimed in one of the preceding claims, wherein salt formation is effected with zinc, calcium or magnesium oxides, hydroxides, carbonates, formates or acetates, or mixtures thereof.

**Revendications**

1. Liants toluène basse pression à base de résines dicyclopentadiène que l'on fait réagir avec 0,15 à 0,25 mole, rapportée à 100 g de résine dicyclopentadiène, d'acides dicarboxyliques à insaturation oléfinique en alpha, beta, ou leurs anhydrides, ces acides dicarboxyliques pouvant être remplacés, dans une mesure secondaire, par leurs semiesters ou semiamides, ou par des acides monocarboxyliques à insaturation oléfinique en alpha, beta, et que l'on a modifié avec des alcools monovalents ou des mélanges d'alcools monovalents et polyvalents, avec formation d'esters ainsi qu'avec des dérivés de métaux bivalents avec formation de sels, caracterisés par le fait que des unités acide carboxylique du produit de réaction:

a) 15 à 40% sont présentés sous forme de groupes carboxyle
b) 25 à 45% sont estérifiés avec au moins un alcool monovalent contenant 4 à 20 atomes de carbone
c) 0 à 10% sont estérifiés avec un alcool polyvalent et
d) 25 à 50% sont présentés sous forme de sels de métaux du deuxième groupe du tableau périodique des éléments, qui peuvent être remplacés, dans une mesure secondaire, par des sels de métaux des premier, troisième et/ou quatrième groupe du tableau périodique des éléments,

sous réserve que la somme des pourcentages indiqués sous a) à d) soit égale à 100 et que le produit de réaction modifié présente un indice K selon Fikentscher compris entre 9 et 13.

2. Liants toluène basse pression selon la revendication 1, caracterisés par le fait qu'ils possèdent des indices d'acide compris entre 20 et 120 et des points de ramollissement selon Kramer-Sarnow-Nagel compris entre 140 et 220 degrés C.

3. Liants toluène basse pression selon la revendication 1 ou 2, caracterisés par le fait que la formation de sel est effectuée en solution.

4. Liants toluène basse pression selon l'une des revendications précédentes, caracterisés par le fait que la formation de sel est effectuée avec des oxydes, hydroxydes, carbonates, formiates ou acétates de zinc, calcium, magnésium ou mélanges de ceux-ci.